# EUROPÄISCHE PATENTSCHRIFT

(11) **EP 1 015 268 B1**
(45) Veröffentlichungstag und Bekanntmachung des Hinweises auf die Patenterteilung: **31.07.2002**
(21) Anmeldenummer: 98951460.9
(22) Anmeldetag: 23.09.1998
(51) Int. Cl.: B60K 15/035

(54) **MULTIFUNKTIONALES VENTIL FÜR EINEN FAHRZEUGTANK**
MULTIFUNCTIONAL VALVE FOR A VEHICLE TANK
SOUPAPE MULTIFONCTIONNELLE POUR RESERVOIR DE VEHICULE

(30) Priorität: 26.09.1997 DE 19742469
(43) Veröffentlichungstag der Anmeldung: 05.07.2000
(73) Patentinhaber: Siemens Aktiengesellschaft, 80333 München (DE)
(72) Erfinder: MEYER, Knut, D-45239 Essen (DE)
(86) Internationale Anmeldenummer: EP9806076
(87) Internationale Veröffentlichungsnummer: WO9916633

(56) Entgegenhaltungen:
- EP-A- 0 773 128
- US-A- 4 886 089
- US-A- 5 443 561
- US-A- 5 535 772

## Beschreibung

Die Erfindung bezieht sich auf ein multifunktionales Ventil für einen Fahrzeugtank mit den Merkmalen des Oberbegriffs des Patentanspruchs 1.

Es wurde schon ein einschlägiges Ventil bekannt, das in die Decke eines Fahrzeugtanks einzubauen ist und zumindest folgende Funktionen in einer Baugruppe vereint:
- Entlüften des Tanks während des Befüllens und Sichern gegen Überfüllen durch Aufbau eines Gegendrucks,
- Belüften während der betrieblichen Entnahme von Kraftstoff,
- Sichern des Tanks gegen Überlastung bei übermäßigem Druckaufbau,
- Schließen bei übermäßiger Schräglage oder Dachlage des Fahrzeugs.

Beim Befüllen eines Kraftstofftanks wird durch den nachströmenden Kraftstoff ein Gemisch aus Luft und Kraftstoffdämpfen verdrängt. Es strömt zunächst durch eine große Entlüftungs-Öffnung zu einem Aktivkohlefilter, der die Kraftstoffanteile zurückhält und im wesentlichen gereinigte Luft in die Umgebung gelangen läßt. Der besagten großen Entlüftungsöffnung ist bei dem bekannten Ventil eine Klappe zugeordnet, die einerseits federnd in ihre Schließlage vorgespannt, andererseits jedoch in normaler Lage des Fahrzeugs durch einen Auftriebskörper offengehalten wird. Mit zunehmender Befüllung taucht der Auftriebskörper, dessen Dichte (1,2) deutlich höher als die des Kraftstoffs (0,7) ist, mehr und mehr in den Kraftstoff ein. Allein aufgrund seines volumetrischen Auftriebs verändert sich das Kraftverhältnis zwischen seiner wirksamen Gewichtskraft und der Kraft der erwähnten Schließfeder, so daß letztere die Klappe schließt, kurz bevor der Füllstand des Tanks seine maximale Höhe erreicht hat.

Fluidisch parallel zu der großen Öffnung ist noch eine weitere, wesentlich kleinere Öffnung in dem Ventil vorgesehen, die ebenfalls der betrieblichen Entlüftung dient, d. h. dem Ausströmen von Kraftstoffdämpfen bei Druckaufbau im Tank während der Fahrt bzw. des Stillstands des Fahrzeugs. Auch diese kleine Öffnung muß bei einem weiteren Ansteigen des Kraftstoffs verschlossen werden, damit kein flüssiger Kraftstoff in dem Entlüftungskanal aufsteigen kann. Ihr ist deshalb ein Ventilkörper zugeordnet, der ebenfalls mit einer relativ schwachen Feder in die Schließlage vorgespannt und vom Gewicht eines Auftriebskörpers (Dichte ebenfalls größer als Kraftstoffdichte) offengehalten wird. Nach dem gleichen Prinzip wie bei der großen Öffnung soll auch die kleine Öffnung schließlich verschlossen werden. Für einen sicheren Betrieb des Tanks ist es wichtig, daß oberhalb des flüssigen Kraftstoffs stets eine Gasblase als Puffer für Druckschwankungen erhalten bleibt.

Die hohe Dichte der Auftriebskörper stellt in Verbindung mit den Federn sicher, daß beide Öffnungen bei übermäßiger Schräglage oder Dachlage des Fahrzeugs sicher verschlossen sind, weil ihr Gewicht bzw. ihr Abtrieb sich dann der jeweiligen Schließfederkraft addiert. Wären die Auftriebskörper in der vorgegebenen Konfiguration als Schwimmer ausgebildet, so würden sie die Klappe bzw. den Ventilkörper gerade in der Dachlage gegen die Federkraft von den Öffnungsquerschnitten abheben, so daß der Tank an diesen Öffnungen undicht wäre.

Bei dem bekannten Ventil kann es bei sehr zögerlichem Betanken jedoch dazu kommen, daß über die kleine Belüftungsöffnung auch die Gasblase oberhalb des Flüssigkeitspegels schließlich völlig abgeführt und der Tank vollständig mit Flüssigkeit gefüllt wird. Insbesondere schließt der Ventilkörper erst bei einem schon sehr hohen Füllstand ab, wobei man offenbar davon ausgegangen ist, daß durch den Drosselwiderstand der kleinen .Öffnung schon vorher ein hinreichender Gegendruck im Tank aufgebaut werde. Dadurch kann es zu Überfüllung des Tanks kommen.

Des weiteren ist die zweite Öffnung abseits der größeren ersten Öffnung angeordnet, so daß die Baugruppe, die in Deckelform in eine Aussparung der Tankdecke eingesetzt wird, insgesamt einen relativ hohen Platzbedarf hat.

Man strebt aber an, derartige Aussparungen im Hinblick auf eine zuverlässige Abdichtung möglichst klein zu halten.

Die Baugruppe umfaßt schließlich noch ein Überdruckventil, das den Tank vor Beschädigung bei starkem Druckanstieg zu schützen hat. Es tritt im wesentlichen dann in Funktion, wenn die Temperatur des Kraftstoffs bei vollem Tank stark ansteigt und der Druck der erwähnten Gasblase über den Schwellwert des Überdruckventils hinaus ansteigt. Bei bereits vorher überfülltem Tank kann aber auch flüssiger Kraftstoff austreten.

Ausgeführt wurde auch ein Belüftungs- und Roll-over-Ventil, das einen glockenförmigen Schwimmer mit Schließkörper umfaßt, in dessen nach unten offenem Innenraum sich bei Anstieg des Tank-Füllstands eine Gasblase hält, während die Belüftungsströmung außen am Schwimmer vorbeigelangen kann. Unterhalb des Schwimmers ist dort eine Kugel vorgesehen, die im Schräg- oder Dachlagefall die Auftriebskraft des Schwimmers überwiegt und den Schließkörper in Schließlage hält. Eine zweite Überström-Öffnung ist bei diesem Ventil nicht vorgesehen.

Ein multifunktionales Ventil für eimen Fahrzeugtank gemäß des oberbegriffs des Patentanspurches 1 ist schon aus Dokmment EP 0 773 128 A bekannt.

Der Erfindung liegt die Aufgabe zugrunde, ein gattungsgemäßes Ventil zu verbessern.

Diese Aufgabe wird erfindungsgemäß mit den kennzeichnenden Merkmalen des Patentanspruchs 1 gelöst. Die Merkmale der Unteransprüche geben vorteilhafte Weiterbildungen dieses Gegenstands an.

Wenn beide Öffnungen jeweils durch Schließkörper tragende Schwimmer verschließbar sind, wird damit zunächst ein zuverlässiges Schließen bei ansteigendem Flüssigkeitspegel erreicht. Für den eher selten eintretenden Roll-over-Fall sieht man eine eigene mechanische Betätigungseinrichtung vor, die dem Auftrieb der Schwimmer in dieser Extremsituation entgegenwirkt, so daß die Öffnungen sicher gegen auslaufenden Kraftstoff verschließbar sind.

Die Betätigungseinrichtung kann in an sich bekannter Weise mindestens einen Körper umfassen, dessen Gewicht größer als die Auftriebskraft der Schwimmerkörper ist, und damit eine besonders einfache Lösung anwenden. Sie kann aber auch einen weiteren Schwimmer umfassen, wobei ein Umlenkmechanismus mit dem weiteren Schwimmer verbunden ist, der dessen Auftriebskraft im Roll-over-Fall auf die beiden Schwimmerkörper gegen deren Auftriebskraft überträgt.

Besonders vorteilhaft ist es in jedem Fall, wenn beide Schwimmerkörper von einer einzigen Einrichtung gemeinsam in der Schließstellung ihrer zugeordneten Schließkörper gehalten werden. Dies wiederum kann man in besonders platzsparender Weise erreichen, wenn man die beiden Öffnungen bzw. die Schwimmer koaxial zueinander anordnet.

Platzsparend kann man dann die zweite Öffnung im ersten Schwimmerkörper anbringen, wenn dieser z. B. glockenförmig ausgebildet ist und eine Führung für den zweiten Schwimmerkörper bildet. Damit wird auch die Forderung nach einer möglichst geringen seitlichen Ausdehnung des Gesamtventils erfüllt.

Für eine nacheilende Schließung der zweiten Öffnung kann man wirksam sorgen, indem der zweite Schwimmer langsamer aufgetrieben wird als der erste. Dies erreicht man z. B., indem der zweite Schwimmer aus einem Material mit etwas höherer Dichte gefertigt wird.

Wiederum platzsparend können beide Schwimmerkörper in einer becherförmigen Führung mit einem konischen oder konkav gewölbten Boden geführt sein, deren Innenraum mit dem Behälter fluidisch kommuniziert. Die Form des Bodens bildet dann die Rollführung für den bereits erwähnten Gewichtkörper zum Verschließen beider Entlüftungsöffnungen.

Die Roll-over-Funktion ist besonders funktionssicher auch über längere Einsatzzeiträume, wenn zwischen dem Boden und der Unterseite der Schwimmerkörper eine Kugel angeordnet ist, deren Durchmesser auf den Boden und den Abstand der Unterseite der Schwimmerkörper zum Boden so abgestimmt ist, daß beide Schließkörper mechanisch in Schließlage gebracht sind, bevor die Kugel seitlich in Anlage an die Führung gerät. Damit wird sowohl Klemmen der Kugel als auch unerwünschte Geräuschentwicklung sicher vermieden. Weil die Kugel beim Durchrollen des nach unten gewölbten Bodens ständig von Kraftstoff benetzt wird, ist auch die Reibung zwischen ihrer Oberfläche und der Unterseite des Schwimmerkörpers vernachlässigbar.

Damit wird ein Schwimmerventil verfügbar, das die Be- und Entlüftung des Tanks ermöglicht, den Tank vor unzulässigem Überdruck und Überfüllung schützt, über eine Tauchrohrabschaltung (Aufbau eines hinreichenden Gegendrucks beim Betanken nach Erreichen des zulässigen Füllstands zum selbsttätigen Abschalten der Zapfpistole) verfügt und eine Roll-over-Funktion umfaßt.

Das Ventil besteht aus einem Doppelschwimmer (Außen- und Innenschwimmer), die je nach Füllstand die Betankungs- und Betriebsentlüftungen nacheinander verschließen bzw. bei sinkendem Füllstand wieder öffnen.

Unter den Schwimmern ist eine Roll-over-Kugel angeordnet, die im Fall einer beliebigen Schräg- oder Überkopf-Lage des Tanks die Auftriebskräfte der Schwimmer überwindet und das Ventil schließt.

Eine weitere Entlüftung ist nicht vorgesehen.

Weitere Einzelheiten und Vorteile des Gegenstands der Erfindung gehen aus der Zeichnung eines Ausführungsbeispiels und deren sich im folgenden anschließender eingehender Beschreibung hervor.

Es zeigen in vereinfachter Darstellung
- Figur 1: einen Schnitt durch ein multifunktionales Ventil mit zwei koaxial angeordneten Schwimmerkörpern in vollständig geschlossener Stellung,
- Figur 2: ein Detail aus Figur 1, in dem eine erste (Entlüftungs-)Öffnung des Ventils geöffnet ist,
- Figur 3: ein Detail aus Figur 1, in dem eine zweite (Belüftungs-)Öffnung des Ventils geöffnet ist,
- Figur 4: eine Schnittansicht des Ventils entsprechend Figur 1, jedoch bei schrägstehendem Fahrzeug, wobei beide Öffnungen mittels einer mechanischen Einrichtung verschlossen sind.

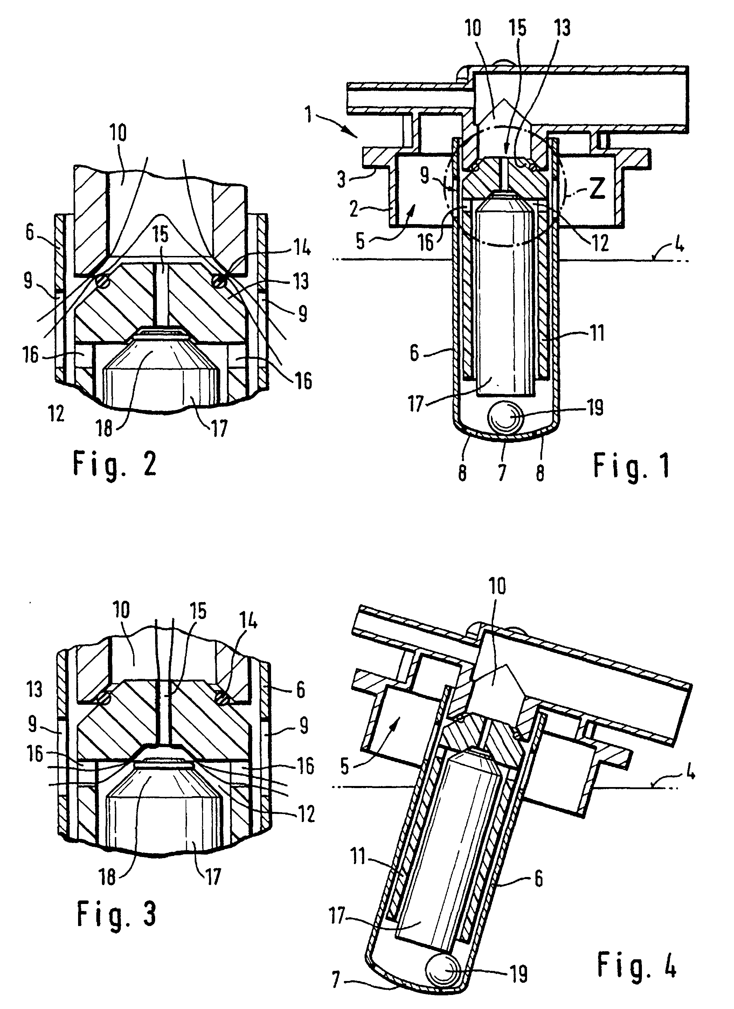

Gemäß Figur 1 ist ein multifunktionales Ventil 1 in einem Halter 2 ausgebildet, der als Deckel einer Öffnung in der Decke eines nicht dargestellten Behälters dienen kann, z. B. eines Kraftstofftanks eines Fahrzeugs. Mit einem Flansch 3 liegt der Halter 2 auf dem Rand dieser Öffnung auf, ggf. unter Zwischenlage einer Dichtung verrastet oder druckdicht verschweißt. Mit 4 ist ein Flüssigkeitspegel in dem Behälter bezeichnet.

Der Halter 2 bildet einen zum Behälter - nach unten - hin glockenartig offenen Raum 5. Etwa mittig in diesem Raum ist eine becherartige Führung 6 angeordnet und etwa in der Ebene des Flansches 3 an dem Körper des Halters 2 befestigt. Sie hat einen kalottenförmigen, konkav gewölbten Boden 7, in dem Löcher 8 vorgesehen sind. Kurz unterhalb ihres oberen Randes hat sie ferner große Durchbrüche 9. Der nach oben offene Innenraum der Führung 6 mündet in eine Entlüftungsöffnung 10, der im Körper des Halters 2 weitergeführt wird.

In dem Halter 2 sind dazu oberhalb des Flansches 3 verschiedene Kanäle ausgebildet, die zu einem nicht gezeigten Aktivkohlefilter zum Abscheiden von Kohlenwasserstoffpartikeln aus der Entlüftungsströmung führen.

Im Halter 2 ist auch ein hier nicht dargestelltes, an sich bekanntes Überdruckventil angeordnet, das ebenfalls mit dem Behälterinhalt kommuniziert und bei übermäßigem - z. B. temperaturbedingtem - Druckaufbau öffnet, um Beschädigung des Behälters zu verhindern.

In der Führung 6 ist ein erster Schwimmerkörper 11 geradlinig auf und ab verschiebbar geführt. Er hat einen etwa glockenförmigen, unten offenen Querschnitt mit einem hohlzylindrischen Innenraum 12. Sein oberes Ende bzw. die Decke des Innenraums 12 bildet einen konischen Schließkörper 13, welcher der Entlüftungsöffnung 10 zugeordnet ist und in der hier gezeigten Schließstellung dichtend gegen den Rand der Entlüftungsöffnung 10 anliegt. Der Schließkörper 13 trägt zur Verbesserung der Dichtwirkung einen elastischen Dichtring 14.

Zentrisch in der Decke des Innenraums 12 ist eine Belüftungsöffnung 15 vorgesehen. Diese hat einen kleinen Querschnitt und damit eine definierte Drosselwirkung. In den Seitenwänden des ersten Schwimmerkörpers 11 sind unterhalb der Decke wiederum Durchbrüche 16 vorgesehen, so daß der Innenraum 12 in Verbindung mit den Löchern 8 im Boden der Führung 6 stets vollständig druckausgeglichen ist.

Im Innenraum 12 des ersten Schwimmerkörpers 11 ist ein zweiter Schwimmerkörper 17 gleichachsig mit dem ersten Schwimmerkörper geführt. An seinem konischen oberen Ende ist er als zweiter Schließkörper 18 - bei Bedarf ebenfalls mit einem Dichtring bestückt - ausgebildet, der mit der Belüftungsöffnung 15 korrespondiert und diese in der hier gezeigten Stellung dicht schließt.

Zwischen den beiden Schwimmerkörpern 11 und 17 und dem Boden 7 bzw. den Seitenwänden der Führung 6 ist eine Kugel 19 frei rollfähig eingesperrt. Ihr Durchmesser ist mit dem kalottenförmigen Boden 7 und dem Abstand der beiden Schwimmerkörper 11, 17 in ihrer Schließlage so bemessen, daß die Kugel beide Schwimmerkörper sicher in der Schließlage hält, bevor sie am seitlichen Rand der Führung 6 zur Anlage kommt (vgl. Figur 4). Man verhindert damit auch ein Anschlagen der Kugel an den seitlichen Rand der Führung und damit die Entstehung unerwünschter Geräusche. Die Kugel braucht nur die Unterseite des inneren Schwimmerkörpers 17 zu berühren, der äußere Schwimmerkörper wird dann mittelbar über den zweiten Schließkörper mit angehoben.

Ferner ist die Kugel 19 so schwer, daß ihr Gewicht ihren eigenen Auftrieb und die Auftriebskraft beider Schwimmerkörper auch in dem Fall sicher überwiegt, daß der Behälter um 180° gekippt wird, d. h. in Überkopflage gerät.

Die Stellung des Ventils gemäß Figur 1, in der sowohl die Entlüftungsöffnung 10 als auch die Belüftungsöffnung 15 verschlossen sind, stellt sich beim zulässigen Füllstand des Behälters, also bei Hochstand des Flüssigkeitspegels 4, selbsttätig aufgrund des Auftriebs der beiden Schwimmerkörper 11 und 17 ein (Füllstop-Funktion oder Tauchrohrabschaltung). Außerdem stellt sie sich bei Schräg- oder Überkopflage des Behälters (Figur 4) ein (Roll-over-Funktion).

Beide Schwimmerkörper 11 und 17 sind so geführt - z. B. durch Längsrippen mit zwischenliegenden Nuten -, daß auch entlang ihren Seiten stets ein vertikaler Druckausgleich möglich ist. Man kann die Führung 6 z. B. in an sich bekannter Weise auch als Korb ausführen.

In der Stellung des Ventils 1 nach Figur 2 ist die Entlüftungsöffnung 10 geöffnet. Dies ist immer dann der Fall, wenn der Füllstand abgesunken ist und kein oder nur geringer Auftrieb an den beiden Schwimmerkörpern vorliegt und auch keine Schräglage des Behälters nach Figur 4. Beim Auffüllen des Behälters bzw. Wiederansteigen des Flüssigkeitspegels 4 kann gemäß Figur 2 das verdrängte Luft-Kraftstoffdampf-Gemisch durch die Durchbrüche 9 und die Entlüftungsöffnung 10 zum Aktivkohlefilter hin entweichen.

Die Stellung des zweiten Schwimmerkörpers 17 ist derweil ohne Belang. Man wird ihn jedoch durch Materialwahl (Dichte) bzw. Eigenmasse so auslegen, daß er später aufschwimmt als der erste Schwimmerkörper. in der hier gezeigten Stellung liegt die Unterseite des Schwimmerkörpers 17 auf der Kugel 19 auf und der erste Schwimmerkörper 11 stützt sich gewichtsbedingt auf dem zweiten Schließkörper ab, so daß die Entlüftungsöffnung 15 verschlossen ist.

Bei Annäherung des Flüssigkeitspegels 4 an den zulässigen Füllstand steigt dann gemäß Figur 3 zunächst der erste Schwimmerkörper 11 in der Führung 6 auf und verschließt mittels seines Schließkörpers 13 und des Dichtrings 14 die Entlüftungsöffnung 10. Gleichzeitig bleibt die Belüftungsöffnung 15 jedoch noch geöffnet, so daß weiterhin eine gedrosselte Entlüftungsströmung entweichen kann. Diese fließt gemäß Figur 3 durch die Durchbrüche 9 in der Führung 6, die Durchbrüche 16 im ersten Schwimmerkörper 11 und die Belüftungsöffnung 15 in die Entlüftungsöffnung 10 ab.

In diesem Zustand wird im Behälter bei rascher Befüllung schon ein hinreichender Gegendruck aufgebaut, daß durch den Einfüllstutzen kein weiterer Kraftstoff mehr nachgefüllt werden kann. Bei langsamer Zuströmung kann hingegen der Flüssigkeitspegel 4 langsam noch weiter ansteigen, jedoch steigt schließlich auch der zweite Schwimmerkörper 17 auf und verschließt mit seinem Schließkörper 18 auch die Belüftungsöffnung 15. Ein Überfüllen des Behälters ist damit ausgeschlossen. In diesem Zustand kann auch bei langsamem Nachfüllen kein Kraftstoff mehr gegen den Tankinnendruck einströmen.

Das erwähnte Überdruckventil öffnet ohnehin erst bei einem Druck, der durch drucklos zulaufenden Kraftstoff nicht erreicht werden kann.

Außenluft zur betrieblichen Belüftung des Behälters während der Entnahme von Kraftstoff kann über eine separate Belüftung (z. B. am Tankdekkel) auch in der Stellung gemäß Figur 1 zuströmen.

Will man auf die Schrägstellungs-Sperre verzichten und nur eine reine Roll-over-Funktion für die Überkopflage vorsehen, so kann man anstelle der Kugel 19 auch einen weiteren Schwimmerkörper (nicht dargestellt) vorsehen, der über einen an der Führung 6 gelagerten Kipphebel die beiden Schwimmerkörper 11 und 17 in Schließlage bringt, wenn der Behälter in den Bereich von 180° Kippwinkel gerät.

## Patentansprüche

1. Multifunktionales Ventil für einen Fahrzeugtank, umfassend eine erste mittels eines ersten Schließkörpers abhängig vom Füllpegel des Behälters verschließbare Öffnung zum Entlüften des Tanks beim Befüllen, eine zweite mittels eines zweiten Schließkörpers verschließbare Öffnung zum gedrosselten Entlüften des Tanks, wobei beide Schließkörper selbsttätig in ihre Schließlage gelangen, wenn das Fahrzeug in eine übermäßige Schräglage oder in Dachlage gerät sogenannte Roll-over-Funktion, wobei beide Schließkörper (13, 18) durch jeweils einen zugeordneten ersten bzw. zweiten Schwimmerkörper (11, 17), die eine geringere Dichte als das im Behälter befindliche Medium haben, in Schließlage bringbar sind, **dadurch gekennzeichnet, daß** bei Roll-over-Funktion auf beide Schwimmerkörper (11, 17) eine einzige mechanische Einrichtung (19) gegen deren Auftrieb einwirkt und die Schließkörper (13, 18) in Schließstellung hält.

2. Multifunktionales Ventil nach Anspruch 1, **dadurch gekennzeichnet, daß** die mechanische Einrichtung mindestens einen Körper ( 19) umfaßt, dessen Gewicht größer als die Auftriebskraft der Schwimmerkörper ist.

3. Multifunktionales Ventil nach Anspruch 1, **dadurch gekennzeichnet, daß** die mechanische Einrichtung mindestens einen weiteren Schwimmer umfaßt, und daß ein Umlenkmechanismus mit dem weiteren Schwimmer verbunden ist, der dessen Auftriebskraft im Roll-over-Fall auf die beiden Schwimmerkörper (11, 17) gegen deren Auftriebskraft überträgt.

4. Multifunktionales Ventil nach einem der vorstehenden Ansprüche, **dadurch gekennzeichnet, daß** die zweite Öffnung (15) im ersten Schwimmerkörper (11) angeordnet ist.

5. Multifunktionales Ventil nach einem der vorstehenden Ansprüche, **dadurch gekennzeichnet, daß** die beiden Öffnungen (10, 15) und die Schwimmerkörper (11, 17) koaxial angeordnet sind, wobei der zweite Schwimmer (17) in dem glockenförmigen ersten Schwimmer (11) radial und in Längsrichtung verschiebbar geführt ist.

6. Multifunktionales Ventil nach einem der vorstehenden Ansprüche, **dadurch gekennzeichnet, daß** die Auftriebskraft des zweiten Schwimmerkörpers (17) kleiner als die des ersten Schwimmerkörpers (11) ist.

7. Multifunktionales Ventil nach einem der vorstehenden Ansprüche, **dadurch gekennzeichnet, daß** die Schwimmerkörper (11, 17) in einer becherförmigen Führung (6) mit einem konischen oder konkav gewölbten Boden (7) geführt sind, deren Innenraum mit dem Behälter fluidisch kommuniziert.

8. Multifunktionales Ventil nach Anspruch 7, **dadurch gekennzeichnet, daß** zwischen dem Boden (7) und der Unterseite der Schwimmerkörper eine Kugel (19) angeordnet ist, deren Durchmesser auf den Boden (7) und den Abstand der Unterseite der Schwimmerkörper zum Boden so abgestimmt ist, daß beide Schließkörper (13, 18) mechanisch in Schließlage gebracht sind, bevor die Kugel (19) seitlich in Anlage an die Führung (6) gerät.

9. Multifunktionales Ventil nach einem der vorstehenden Ansprüche, **dadurch gekennzeichnet, daß** die Entlüftungsöffnung (15) als Drosselbohrung ausgeführt ist.

10. Multifunktionales Ventil nach einem der vorstehenden Ansprüche, **dadurch gekennzeichnet, daß** die beiden Schließkörper jeweils mit einem Dichtring (14) versehen sind.

## Claims

1. Multifunctional valve for a vehicle tank, comprising a first opening which can be closed by means of a first closing body as a function of the filling level of the tank and is intended for ventilating the tank as it is being filled, a second opening which can be closed by means of a second closing body and is intended for throttled ventilating of the tank, the two closing bodies automatically going into their closing position if the vehicle takes up an excessive sloping position or undergoes a "roll-over action", it being possible for the two closing bodies (13, 18) to be brought into the closing position by a respectively assigned first or second float body (11, 17) which are of lower density than the medium in the container, **characterized in that** in the event of a roll-over action, a single mechanical device (19) acts upon the two float bodies (11, 17) to counter their buoyancy and keeps the closing bodies (13, 18) in the closing position.

2. Multifunctional valve according to Claim 1, **characterized in that** the mechanical device comprises at least one body (19) whose weight is greater than the lifting force of the float bodies.

3. Multifunctional valve according to Claim 1, **characterized in that** the mechanical device comprises at least one further float, and **in that** a deflection mechanism is connected to the further float, which mechanism, in the event of rolling over, transmits the lifting force of the further float to the two float bodies (11, 17) to counter their lifting force.

4. Multifunctional valve according to one of the preceding claims, **characterized in that** the second opening (15) is arranged in the first float body (11).

5. Multifunctional valve according to one of the preceding claims, **characterized in that** the two openings (10, 15) and the float bodies (11, 17) are arranged coaxially, the second float (17) being guided in the bell-shaped first float (11) in a manner such that it can be displaced radially and in the longitudinal direction.

6. Multifunctional valve according to one of the preceding claims, **characterized in that** the lifting force of the second float body (17) is smaller than that of the first float body (11).

7. Multifunctional valve according to one of the preceding claims, **characterized in that** the float bodies (11, 17) are guided in a cup-shaped guide (6) which has a conical or concavely curved bottom (7) and the interior of which communicates with the container by liquid.

8. Multifunctional valve according to claim 7, **characterized in that** a ball (19) is arranged between the bottom (7) and the lower side of the float bodies, the diameter of which ball is matched to the bottom (7) and to the distance of the lower side of the float bodies from the bottom in a manner such that the two closing bodies (13, 18) are brought mechanically into the closing position before the ball (19) moves laterally to bear against the guide (6).

9. Multifunctional valve according to one of the preceding claims, **characterized in that** the ventilation opening (15) is designed as a throttle bore.

10. Multifunctional valve according to one of the preceding claims, **characterized in that** the two closing bodies are each provided with a sealing ring (14).

## Revendications

1. Valve multifonctionnelle pour réservoir de véhicule, comprenant une première ouverture pouvant être obturée au moyen d'un premier obturateur en fonction du niveau de remplissage du réservoir et servant à la purge du réservoir lors du remplissage, une seconde ouverture pouvant être obturée au moyen d'un second obturateur et servant à la purge étranglée du réservoir, les deux obturateurs parvenant automatiquement dans leur position de fermeture lorsque le véhicule parvient dans une position inclinée excessive ou en position sur le toit, ce qu'il est convenu d'appeler une fonction de retournement, tandis que les deux obturateurs (13, 18) peuvent être amenés en position de fermeture chacun au moyen d'un premier ou d'un second corps formant flotteur respectif (11, 17) associé, lesquels corps ont une densité plus faible que le fluide situé dans le réservoir, **caractérisée en ce qu'**en cas de fonction de retournement, un dispositif mécanique (19) unique agit sur les deux corps formant flotteur (11, 17) à l'encontre de leur poussée d'Archimède et maintient les obturateurs (13, 18) en position de fermeture.

2. Valve multifonctionnelle suivant la revendication 1, **caractérisée en ce que** le dispositif mécanique comprend au moins un corps (19) dont le poids est supérieur à la poussée d'Archimède des corps formant flotteur.

3. Valve multifonctionnelle suivant la revendication 1, **caractérisée en ce que** le dispositif mécanique comprend au moins un autre flotteur auquel est relié un mécanisme de renvoi de direction qui, dans le cas de retoumement, transmet la poussée d'Archimède de cet autre flotteur aux deux corps formant flotteur (11, 17), à l'encontre de la poussée d'Archimède de ceux-ci.

4. Valve multifonctionnelle suivant l'une des revendications précédentes, **caractérisée en ce que** la seconde ouverture (15) est située dans le premier corps formant flotteur (11).

5. Valve multifonctionnelle suivant l'une des revendications précédentes, **caractérisée en ce que** les deux ouvertures (10, 15) et les corps formant flotteur (11, 17) sont situés d'une manière coaxiale, le second flotteur (17) étant guidé radialement, et pouvant se déplacer en translation suivant la direction longitudinale, dans le premier flotteur (11) en forme de cloche.

6. Valve multifonctionnelle suivant l'une des revendications précédentes, **caractérisée en ce que** la poussée d'Archimède du second corps formant flotteur (17) est inférieure à celle du premier corps formant flotteur (11).

7. Valve multifonctionnelle suivant l'une des revendications précédentes, **caractérisée en ce que** les corps formant flotteur (11, 17) sont guidés dans un guidage (6) en forme de gobelet, comportant un fond (7) conique ou de forme bombée concave, dont la cavité communique avec le réservoir sur le plan de l'écoulement des fluides.

8. Valve multifonctionnelle suivant la revendication 7, **caractérisée en ce qu'**entre le fond (7) et le côté inférieur des corps formant flotteur, il est disposé une bille (19) dont le diamètre est adapté au fond (7) d'une manière telle et la distance du côté inférieur des corps formant flotteur au fond est adaptée d'une manière telle que les deux obturateurs (13, 18) sont amenés mécaniquement en position de fermeture avant que la bille (19) ne parvienne transversalement en appui sur le guidage (6).

9. Valve multifonctionnelle suivant l'une des revendications précédentes, **caractérisée en ce que** l'ouverture de purge (15) est réalisée sous forme d'un perçage d'étranglement.

10. Valve multifonctionnelle suivant l'une des revendications précédentes, **caractérisée en ce que** les deux obturateurs sont pourvus chacun d'une bague d'étanchéité (14) respective.
